# EUROPEAN PATENT APPLICATION

(11) **EP 2 239 481 A1**
(43) Date of publication of application: **13.10.2010**
(21) Application number: 10157010.9
(22) Date of filing: 19.03.2010
(51) Int. Cl.: F16F 9/32, B62K 25/08, B62K 25/16, F16F 9/36

(54) **Motorcycle fork assembly**

(30) Priority: 07.04.2009 IT MC20090074
(71) Applicant: Vignocchi, Loris, 40069 Zola Predosa (BO) (IT)
(72) Inventor: Vignocchi, Loris, 40069 Zola Predosa (BO) (IT)
(74) Representative: Cutropia, Gianluigi

(57) **Abstract**

A motorcycle fork assembly is disclosed, comprising at least one telescopic assembly (1) that comprises a sheath (2), a stem (3) slidingly mounted inside the sheath (2), two guide bushes (B1, B2) joined to the sheath (2) to guide the sliding of the stem (3), an upper seal (6) disposed in the upper part of the sheath (2), above said upper bush (B2), to prevent leakage of oil (O) contained in the cylindrical space between stem (3) and sheath (2), and a lower seal (70) disposed under said lower bush (B1) to confine oil (O) only in the cylindrical space between stem (3) and sheath (2) and between the lower seal (70) and upper seal (6) in such a way that no oil is contained inside the chamber (30) of the stem and inside the chamber (20) of the sheath under the stem.

## Description

The present patent application for industrial invention relates to a motorcycle fork assembly.

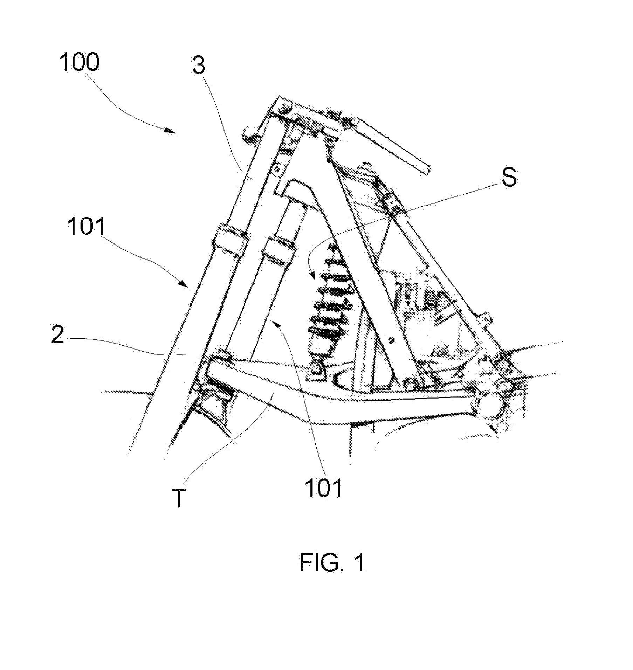

Fig. 1 illustrates the front part of a motorcycle provided with fork assembly (100). The fork assembly (100) comprises two telescopic assemblies (101). Each telescopic assembly (101) comprises an external tubular element (2), generally defined as sheath, and an internal tubular element (3) generally defined as stem, that is telescopically slidingly mounted inside the sheath (2).

As shown in Fig. 1, the lower end of the sheath (2) is connected to the hub of the front wheel. The upper part of the stem (3) protrudes from the sheath (2), in such a way that the upper end of the stem (3) is connected to the motorcycle handlebar. A suspension (S) is disposed between the front part of the motorcycle frame and a subframe (T) connected to the sheaths (2) of the two telescopic assemblies of the fork assembly.

Evidently, in other types of motorcycles the telescopic assembly (101) is inverted, that is to say the stems (3) are connected to the hub of the wheel and the sheaths (2) are connected to the handlebar.

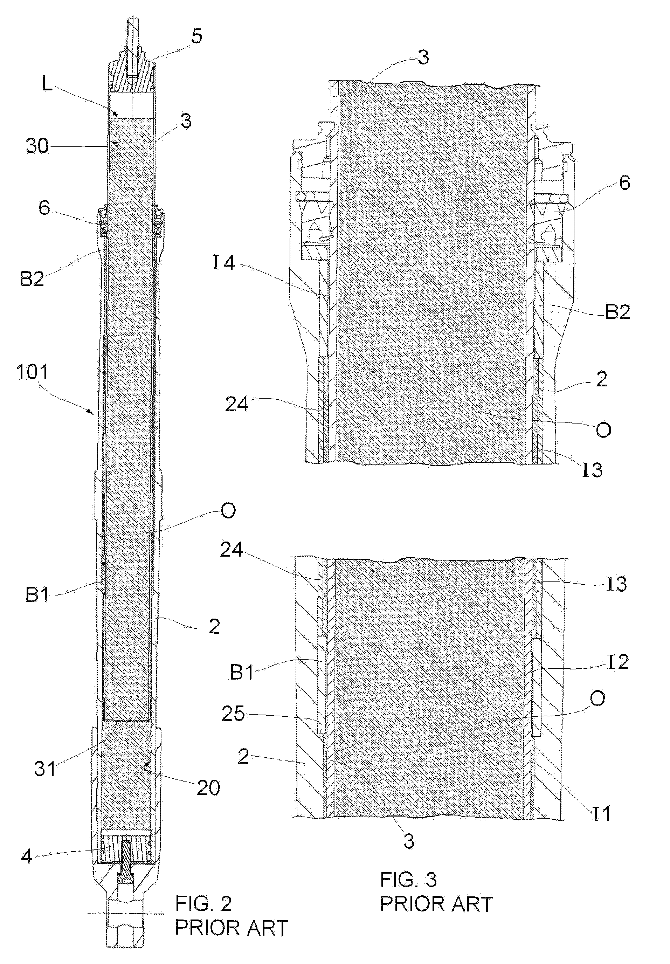

Figures 2 and 3 are an axial view of a telescopic assembly (101) according to the known art.

The sheath (2) is an internally empty tube that is axially provided with a cylindrical chamber (20). The chamber (20) of the sheath (2) is closed by a seal bottom (4), whereas is open on top to let the stem (3) protrude.

The stem (3) is an internally empty tube that is axially provided with a cylindrical chamber (30). The external diameter of the stem (3) is slightly lower than the internal diameter of the sheath (2) to slide axially inside it (telescopic coupling). The stem (3) is provided with an open lower end (31) so that the chamber (30) of the stem communicates with the chamber (20) of the sheath.

Oil or other type of lubricant (O) is poured in the chamber (30) of the stem. So the oil (O) reaches the chamber (20) of the sheath up to the plug (4) and rises inside the cylindrical space generated between the external surface of the stem (3) and the internal surface of the sheath (2). A seal (6) is disposed at the upper end of the sheath, which presses on the stem (3) to prevent leakage of oil (O).

The oil (O) inside the stem (3) reaches a level (L) in the proximity of the upper end of the stem that is closed with a seal plug (5).
The telescopic movement of the stem (3) inside the sheath (2) is guided by two guide bushes (B1, B2) joined to the sheath (2).

As shown in Fig. 3, the first seal bush (B1) is stopped against a recessed collar (25) obtained in the sheath. A cylindrical spacer (24) is disposed in the first bush (B1). The second bush (B2) is disposed on the cylindrical spacer (24) and a lock washer (9) acts on the second bush (B2) to lock the first bush (B1), spacer (24) and second bush (B2) assembly to the sheath (2).

So, the following is generated starting from the bottom:
- a first space (I1) between stem (3) and sheath (2);
- a second space (I2) between stem (3) and first bush (B1),
- a third space (13) between stem (3) and spacer (24); and
- a fourth space (I4) between stem (3) and second bush (B2).

The spaces (I1, I2, I2, I4) are in communication and must be sufficiently large to allow for passage of oil (O) to lubricate the friction surface of the bushes (B1, B2).

Since the shock-absorbing function is mainly carried out by the suspension (S) (Fig. 1), the oil (O) inside the telescopic assembly (101) must perform only a lubricating function, that is to say lubricate the friction surface of the bushes (B1, B2).

It appears evident that such a configuration of the telescopic assembly (101), wherein the chambers (20, 30) of the sheath and the stem are full of oil (O), involves waste of oil and at the same time excessive weight of the fork assembly (100).

The US patent US6,089,585 discloses a fork assembly as claimed in the preamble of claim 1.

The purpose of the present invention is to eliminate the drawbacks of the known art, by disclosing a motorcycle fork assembly that is able to minimise the quantity of oil necessary for lubrication.

Another purpose of the present invention is to provide such a motorcycle fork assembly that is light, versatile, inexpensive and easy to make.

These purposes are achieved by the present invention according to the features claimed in the independent claim 1.
Advantageous embodiments are disclosed in the dependent claims.

The motorcycle fork assembly according to the invention comprises at least one telescopic assembly. The telescopic assembly comprises:
- a tubular sheath that is internally empty to form a chamber,
- a tubular stem that is internally empty to form a chamber, said stem being telescopically slidingly mounted inside the sheath,
- a lower guide bush and an upper guide bush joined to the sheath to guide the sliding of the stem,
- an upper seal disposed in the upper part of the sheath, above the upper bush, to prevent leakage of the oil contained in the cylindrical space between stem and sheath, and
- a lower seal disposed under the lower bush to confine the oil only in the cylindrical space between stem and sheath and between the lower seal and the upper seal, in such a way that no oil is contained inside the chamber of the stem and inside the chamber of the sheath under the stem.

The lower bush and the upper bush are supported by corresponding supports joined to the sheath and the lower seal is a seal ring recessed in the lower support under the lower bush. The supports are mounted in the sheath with very high precision.

The advantages of the motorcycle fork assembly according to the invention are evident, since it is able to reduce the quantity of oil that is necessary for lubrication and at the same time guarantee lower weight of the fork assembly compared to the fork assemblies of the known art.

Additional characteristics of the invention will appear evident from the detailed description below, which refers to merely illustrative, not limiting embodiments, illustrated in the enclosed drawings, wherein:
Fig. 1 is a diagrammatic perspective view of the front part of a motorcycle;
Fig. 2 is an axial view of a telescopic assembly of a fork assembly according to the known art;
Fig. 3 is a partially interrupted enlarged view of the telescopic assembly of Fig. 2;
Fig. 4 is an axial view of a telescopic assembly of a fork assembly according to the invention;
Fig. 5 is a partially interrupted enlarged view of the telescopic assembly of Fig. 4;
Fig. 6 is an axial view of a second embodiment of the telescopic assembly of a fork assembly according to the invention;
Figs. 6A and 6B are enlarged views of details contained in circles A and B of Fig. 6, respectively.

In the following text identical elements or elements that correspond to elements that have already been described are indicated with the same reference numerals, omitting their detailed description.

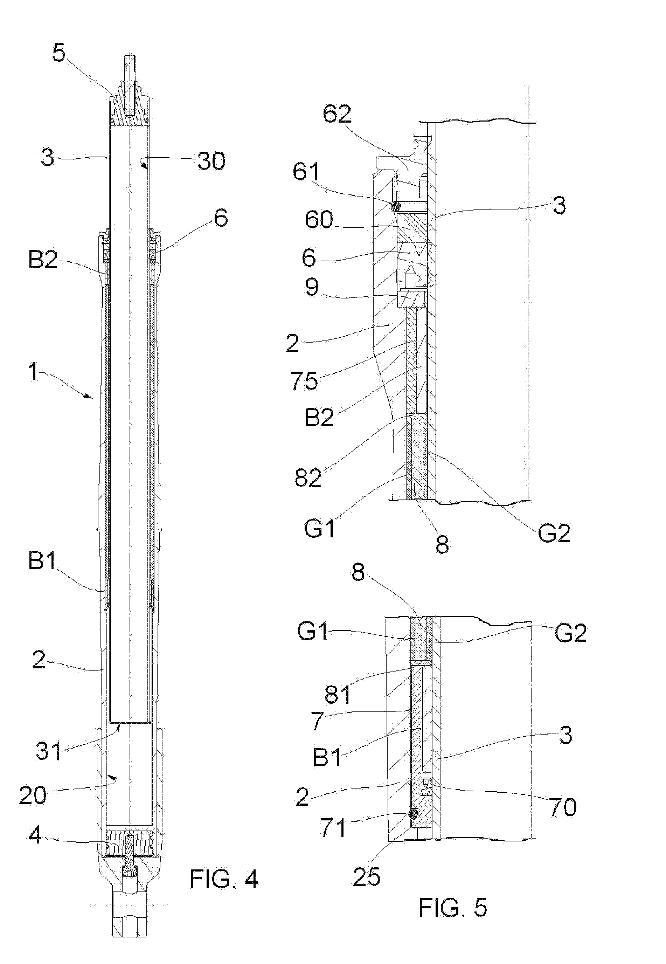

With reference to Figs. 4 and 5, the fork assembly according to the invention is disclosed. The fork assembly according to the invention comprises at least one telescopic assembly, which is generally indicated with reference numeral (1).

As shown in Fig. 4, the peculiarity of the invention is represented by the fact that no oil is contained in the chamber (30) of the stem (3) and in the chamber (20) of the sheath (2) under the lower end (31). In fact, oil (O) is confined only in a cylindrical space defined:
- laterally by the external surface of the stem (3) and by the internal surface of the sheath (2),
- on the bottom by a lower seal (70) disposed under the lower bush (B1), and
- on top by the upper seal (6) disposed above the upper seal (B2).

To obtain such a solution, as shown in Fig. 5, a lower cylindrical support (7) that supports the lower bush (B1) is disposed against a stop collar (25) obtained on the internal surface of the sheath. An O-ring (71) is positioned between the cylindrical support (7) and the sheath (2). The lower seal (70) is of seal ring type and is disposed in the internal surface of the support (7) under the lower bush (B1).

A lower washer (81) is disposed on the lower support (7) and on the lower bush (B1). A cylindrical spacer (8) is disposed on the washer (81) in such a way to generate a first space (G1) between spacer (8) and sheath (2) and a second space (G2) between spacer (8) and stem (3). The spaces (G1) and (G2) are filled with oil.

An upper washer (82) is disposed on the upper border of the spacer (8). An upper cylindrical support (75) that supports the upper bush (B2) is disposed on the upper washer (82).

A lock washer (9) pushes on the upper border of the upper support (75) and of the upper bush (B2) in such a way to lock the assembly formed of lower support (7) with lower bush (B1), spacer (8) with washers (81, 82) and upper support (75) with upper bush (B2).

The seal ring (6) is disposed on the washer (9) to prevent leakage of oil outside the telescopic assembly (1).

A compensator ring (60) with square cross-section is disposed above the seal (6). An O-ring (61) is disposed on the compensator ring (60), whereon a last seal (62) that closes the upper border of the sheath (2) is disposed.

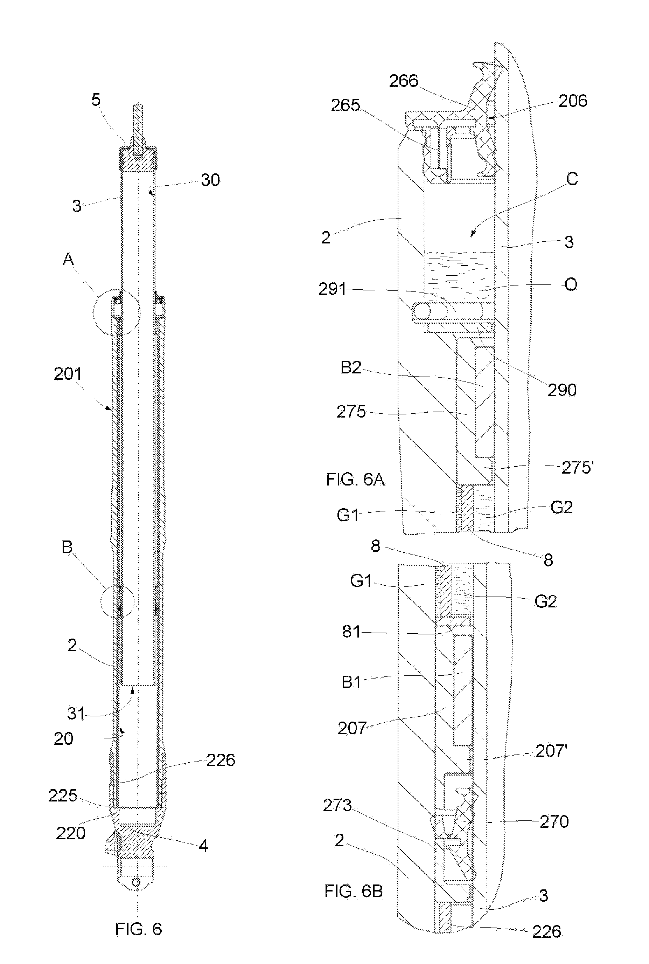

With reference to Figs. 6, 6A and 6B a telescopic assembly (201) according to a second embodiment is disclosed.

With reference to Fig. 6, the telescopic assembly (201) comprises a lower bottom (220) that is fixed to the lower part of the sheath (2). The bottom (220) is internally provided with a collar (225) whereon a cylindrical spacer (226) is engaged.

With reference to Fig. 6B, a seal-holding support (273) with L-shaped cross-section is disposed on the upper border of the spacer (226). In this way the lower seal (270) is locked between seal-holding support (273) and bush-holding support (207). The lower seal (270) is of double lip seal ring type. In such a case the bush-holding support (207) has a collar (207') that protrudes inwards to support the lower bush (B1).

With reference to Fig. 6A, the upper bush-holding support (275) is disposed directly above the spacer (8). The upper support (275) has a collar (275') that protrudes inwards to support the upper bush (B2).

A washer (290) and a steel ring (291) are disposed on the upper support (275) to lock the assembly like the lock washer (9) of the first embodiment. In such a case the upper seal (206) is disposed at the upper end of the sheath in such a way to form a chamber (C) between ring (291), upper seal (206), external lateral surface of the stem (3) and internal lateral surface of the sheath (2). The chamber (C) is filled at least partially with oil (O), acting as oil tank.

The upper seal (206) is a double lip seal ring and is provided with a seal core (265) coated with rubber (266).

Although not shown in the figures, a metal wire is fixed to the lower wall of the stem (3) in such a way to allow the stem (3) to travel while preventing the complete extraction of the stem that would involve oil leakage.

The present description has been made with specific reference to the figures wherein the telescopic assembly (1; 201) comprises a sheath (2) designed to be connected to the hub of the wheel and a stem (3) adapted to be connected to the handlebar. Nevertheless, it appears evident that the invention is also extended also to the case wherein the telescopic assembly (1) is inverted, that is to say the sheath (2) is connected to the handlebar and the stem (3) is connected to the hub of the wheel. In such a case, also the "upper" and "lower" definitions will be inverted.

Moreover, although specific reference is made to oil in the description, it is evident that the invention extends to any type of lubricant equivalent to oil.

Numerous variations and modifications can be made to the present embodiments of the invention by an expert of the field, while still falling within the scope of the invention as claimed in the enclosed claims.

## Claims

1. Motorcycle fork assembly, comprising at least one telescopic assembly (1; 201) comprising:
- a tubular sheath (2) that is internally empty to form a chamber (20),
- a tubular stem (3) that is internally empty to form a chamber (30), said stem being telescopically slidingly mounted inside the sheath (2),
- an upper guide bush (B2) joined with the sheath (2) to guide the sliding of the stem (3),
**characterised in that** it also comprises
- a lower guide bush (B1) joined with the sheath (2) to guide the sliding of the stem (3),
- an upper seal (6; 206) disposed in the upper part of the sheath (2), above the upper bush (B2), to prevent leakage of the oil contained in the cylindrical space between stem (3) and sheath (2),
- a lower seal (70; 270) disposed under the lower bush (B1) to confine oil (O) only in the cylindrical space between stem (3) and sheath (2) and between the lower seal (70; 270) and the upper seal (6, 206) in such a way that no oil is contained inside the chamber (30) of the stem and inside the chamber (20) of the sheath under the stem;
wherein
said lower bush (B1) and upper bush (B2) are supported by corresponding supports (7; 207, 75; 275) joined with said sheath and said lower seal (70; 270) is a seal ring (70) recessed in the lower support (7; 207) under the lower bush (B1).

2. Fork assembly as claimed in claim 1, **characterised in that** it comprises a cylindrical spacer (8) disposed between said lower support (7; 207) and said upper support (75; 275) in such a way to define a first cylindrical space (G1) between spacer (8) and sheath (2) and a second cylindrical space (G2) between spacer (8) and stem (3), wherein said spaces (G1, G2) are filled with oil.

3. Fork assembly as claimed in claim 2, **characterised in that** it comprises:
- a lower washer (81) disposed between lower support (7) and lower border of the cylindrical spacer (8), and
- an upper washer (82) disposed between upper border of the cylindrical spacer (8) and upper support (75).

4. Fork assembly as claimed in any one of the above claims, **characterised in that** it comprises a lock washer (9; 290, 291) disposed above the upper support (75; 275) and under said upper seal (6; 206).

5. Fork assembly as claimed in claim 4, **characterised in that** between said washer (290, 291) and said upper seal (206) a chamber (C) is defined to be filled at least partially with oil (O) in order to act as tank.

6. Fork assembly as claimed in claim 5, **characterised in that** said upper seal (206) is disposed on the upper border of said sheath (2) in order to act as closure seal.

7. Fork assembly as claimed in any one of the above claims, **characterised in that** it comprises an O-Ring (71) disposed between lower support (7) and sheath (2).

8. Fork assembly as claimed in any one of the above claims, **characterised in that** it comprises a compensator ring (60) disposed above said upper seal (6) and a closure seal (62) disposed above said compensator ring (60) and on the upper border of said sheath (2).

9. Fork assembly as claimed in any one of the above claims, **characterised in that** said lower seal (270) is recessed between a second lower support (273) and said lower support (207) that supports the lower bush (B1).

10. Fork assembly as claimed in claim 9, **characterised in that** said second lower support (273) is disposed above a cylindrical spacer (226) supported by an internal collar (225) of a lower lid (220) fixed to the lower wall of said sheath (2).
